# EUROPEAN PATENT SPECIFICATION

(11) **EP 4 299 330 B1**
(45) Date of publication and mention of the grant of the patent: **18.12.2024**
(21) Application number: 23182202.4
(22) Date of filing: 28.06.2023
(51) Int. Cl.: B41J 29/393, B41J 2/315

(54) **PRINTING APPARATUS AND METHOD OF MEASUREMENT**
DRUCKVORRICHTUNG UND MESSVERFAHREN
APPAREIL D'IMPRESSION ET PROCÉDÉ DE MESURE

(30) Priority: 28.06.2022 GB 202209452
(43) Date of publication of application: 03.01.2024
(73) Proprietor: Dover Europe Sàrl, 1214 Vernier (CH)
(72) Inventor: CHAMBERS, John, West Bridgford Nottingham NG2 5HA (GB)
(74) Representative: Forresters IP LLP

(56) References cited:
- GB-A- 2 448 303
- JP-A- H07 246 746
- US-A1- 2010 110 137

## Description

The invention relates to a printing apparatus, in particular, but not exclusively, to a transfer printing apparatus, and a method of monitoring one or more parameters of the printing apparatus.

Transfer printing is well known in the art of commercial printing. An ink carrying tape or ribbon is transferred along a ribbon path from a supply spool, to a take up spool, past a printhead which is operable to transfer ink from the ribbon to a substrate. The printhead may include thermally energisable printing elements or pixels, which are operable to warm the ink on the ribbon such that it can be removed from the ribbon and transferred to the substrate to form an image, for example data, a pattern, a bar code, QR code, etc.. One or both of the supply spool and the take up spool are typically driven in order to transfer the ribbon between the spools. The ribbon can typically be moved in two directions between the spools, i.e., in a forward direction and reverse direction. The substrate on to which ink is to be transferred during a printing operation is typically moveable relative to the printhead. There are two principal operating modes - intermittent printing and continuous printing. In intermittent printing, the substrate is advanced to a printing position near to the printhead and then stops, the printhead is then moved relative to the substrate to transfer ink from the ribbon to the substrate to create an image. The substrate then advances to a next printing position. This printing operation process is typically repeated until all required printing operations have been completed, and/or the inked ribbon is depleted and/or the substrate is depleted. In continuous printing, the substrate moves substantially continuously relative to the printhead, whilst the printhead remains in a substantially fixed lateral position relative to a substrate support. In this instance, "lateral" movement of the printhead (or the absence thereof) is intended to mean movement substantially parallel with the direction of movement of the substrate. In both intermittent and continuous printing modes, the printhead typically moves in a longitudinal direction, towards and away from the ribbon and the substrate, between a non-printing position, in which the printhead is not in contact with the ribbon (or at least not sufficiently close to be able to transfer ink from the ribbon) and a printing position, in which the printhead is in contact with the ribbon (or at least is close enough to transfer ink from the ribbon). The non-printing position may include a plurality of positions, including a "ready to print position" and a retracted position, which may be required, for example, for maintenance purposes.

It is important to be able to accurately control the speed of the ribbon relative to the speed of the substrate, so as to optimise print quality. In some circumstances, it is desirable to accurately control the ribbon speed to correspond with the speed of the substrate, for example to prevent smearing of ink, and/or to ensure that ink is present on the portion of ribbon adjacent the printhead, to avoid failed or poor quality prints. The ribbon speed may be different from the speed of the substrate, but may be linked to the substrate speed. The ribbon speed may be slower than the speed of the substrate. Therefore, monitoring the speed of the ribbon and/or the substrate is desirable.

It is known to provide a rotary encoder externally of the printing apparatus to provide information relating to the speed of the substrate. Such a rotary encoder is often rotated by a wheel placed on the substrate, the wheel rotating as the substrate moves, or the encoder may be connected to a roller in the substrate path, for example to the shaft of such a roller. The encoder typically produces one or two separate square waves, on respective digital outputs. Each digital output may indicate one of speed and direction of movement of the substrate. One complete revolution of the encoder will generate a known number of pulses in the outputs. The outputs may be used to determine the speed and the direction of movement of the object causing the encoder to rotate, e.g., the substrate in the present example. A linear substrate speed can be determined from the rotational speed and the circumference of the wheel or roller. Encoders have several disadvantages, including relatively high cost; potential inaccuracy - for example if the substrate or ribbon slips on the roller/wheel; the encoder outputs need to be processed by a controller (e.g., the time period between square wave edges must be monitored/measured and converted to a speed - as the rotational speed increases the frequency of the square wave increases, placing a high computational load on the processor/controller computing the speed); the encoder is external to the printing apparatus, mounted in the production line, typically with a cable to connect it to the printing apparatus; contact encoders must be mounted close to, or at the point where the printing operations occur (to ensure that the image is printed at approximately the same speed as the substrate is moving at the printhead, to avoid stretching or compression of the image - this can be difficult owing to space constraints around the printing apparatus); and maintenance of contact encoders may include replacing worn parts, cleaning and, in some cases, sterilisation, (for example where the substrate that the encoder contacts is food packaging).

It is desirable to be able to determine the position of the printhead, for example relative to the ribbon and/or the substrate, accurately. This is such that a printhead drive apparatus which is responsible for positioning the printhead relative to the ribbon and/or the substrate does not cause too much or too little pressure to be applied during a printing operation, for example, and may also ensure that the printhead does not contact other parts of the printing apparatus and/or contact the ribbon and/or the substrate and/or a substrate support in the wrong place. If the printhead moves out of alignment, for example in a lateral direction along the ribbon path, or in a direction perpendicular to the ribbon path, but in approximately the same plane as the ribbon path, the image produced may be incorrectly positioned on the substrate or may be incomplete. Inaccurate positioning of the printhead may lead to damage to the printhead, and/or damage to other parts of the printing apparatus and/or inadequate print quality, for example. It is known to determine the pressure applied by the printhead on the ribbon/substrate by the use of a load cell. The load cell determines that the printhead has contacted the ribbon/substrate when the load cell detects that a predetermined pressure has been reached or exceeded.

GB 2 448 303 A discloses a thermal transfer printer having a tape drive comprising two motors, two tape spool supports on which spools of tape may be mounted, each spool being drivable by a respective one of said motors, a sensor for sensing tape motion, and a controller for controlling the energisation of the motors such that the tape may be transported in at least one direction.

JP H07 246746 A discloses an ink colour detection device including a light emitting element that emits light at two different wavelengths alternately at an appropriate time interval. These emitted light signals transmit through an ink ribbon and are attenuated according to transmission characteristics peculiar to respective ink colours to be incident on a light detection element. Incident light signals are compared with comparison data to determine the colour of the ribbon.

US 2010/110137 A1 discloses a method of using a vertical cavity surface emitting laser in a printing apparatus to detect a property of a surface and to detect an edge of the surface.

There is provided a printing apparatus including a printhead and a monitoring device, the monitoring device including an emitter, a receiver, and a processor; the emitter being operable to emit a first output and a second output towards a target surface, and the receiver being operable to receive first data corresponding to a reflected portion of the first output and data corresponding to a reflected portion of the second output, each reflected portion having been reflected by the target surface, wherein each output emitted by the emitter is electromagnetic radiation, each reflected portion is an interference pattern, and wherein the processor is operable to compare the data corresponding to the reflected portion of the first output and the data corresponding to the reflected portion of the second output to monitor a parameter of the target surface relative to the monitoring device.

The parameter may be at least one of position, displacement, speed and acceleration of the target surface.

The monitoring device may be an optical sensor.

The output of the emitter may be coherent electromagnetic radiation.

The emitter may be a laser.

The emitter may be a vertical-cavity surface-emitting laser.

At least part of the monitoring device may be housed substantially within a body of the printer that also houses the printhead. For example, the emitter and/or receiver may be housed substantially within the body of the printer that also houses the printhead. The entire monitoring device may be housed substantially within the body of the printer that also houses the printhead.

At least part of the monitoring device may be positioned on or adjacent the printhead. For example, the emitter and/or receiver may be positioned on or adjacent to the printhead. The entire monitoring device may positioned on or adjacent the printhead.

The emitter of the monitoring device may be arranged such that the output of the emitter may be emitted towards a position on the target surface which is aligned with one or more printing elements of the printhead.

The target surface may be a substrate to be printed, and/or an inked ribbon.

The printing apparatus may include a plurality of monitoring devices, so as to enable monitoring of a plurality of parameters.

The printing apparatus may include a monitoring array, the monitoring array including one or more monitoring devices.

The plurality of monitoring devices may be operable to monitor parameters of a plurality of target surfaces.

The printing apparatus may further include a controller wherein the controller is operable to receive data indicative of one or more monitored parameters and to use the data indicative of the one or more monitored parameters to determine at least one of the speed of the target surface relative to the monitoring device, the acceleration of the target surface, and a diameter of a spool of inked ribbon.

The printing apparatus may be a thermal transfer printer.

There is also provided a method of monitoring a parameter in a printing apparatus, the method including:
providing a monitoring device including an emitter, a receiver, and a processor;
emitting a first output from the emitter towards a target surface at a first time;
receiving a reflected portion of the first output, which is reflected by the target surface, at the receiver;
storing data representative of the reflected portion of the first output in the monitoring device;
emitting a second output from the emitter towards the target surface, at a second time, the second time being after the first time, wherein a difference between the first time and the second time is a first interval;
receiving a reflected portion of the second output, which is reflected by the target surface, at the receiver;
wherein the first output and the second output of the emitter includes electromagnetic radiation and each reflected portion is an interference pattern, and the method includes comparing data representative of the reflected portion of the second output with the data representative of the reflected portion of the first output, using the processor of the monitoring device, to monitor a parameter of the target surface relative to the monitoring device during the first interval.

The parameter may be position and/or displacement of the target surface relative to the monitoring device.

The method may include:
emitting a series of coherent electromagnetic radiation outputs, there being a respective time interval between each output and a subsequent output in the series;
receiving a corresponding reflected portion of each output of the series at the receiver; and
determining a monitoring period between a first and last output of at least three outputs of the series;
comparing the respective reflected portions of the at least three outputs of the series, to monitor displacement of the target surface relative to the monitoring device during the monitoring period.

The comparison of the reflected portions of the outputs may enable monitoring of displacement of the target surface relative to the monitoring device in two dimensions.

The method may include receiving data indicative of the monitored parameter of the target surface at a controller of a printing apparatus, and using the monitored parameter to determine a further parameter of the target surface.

The further parameter maybe at least one of speed and acceleration.

The target surface may be a spool of inked ribbon, and the further parameter may be a diameter of the spool of inked ribbon.

The method may include using at least one of the monitored parameter and the further parameter to control an aspect of a printing operation of the printing apparatus.

### BRIEF DESCRIPTION OF THE FIGURES

In order that the present disclosure may be more readily understood, preferable features thereof will now be described, by way of example only, with reference to the accompanying drawings, in which:
FIGURE 1 is an illustrative cut away view of a printing apparatus;
FIGURE 2 is an enlarged, illustrative view of a monitoring device of the printing apparatus of Figure 1 and a target surface;
FIGURE 3 is an illustrative perspective view of a printhead adjacent a substrate to be printed, to illustrate possible directions of displacement of the printhead and/or a target surface; and
FIGURE 4 is a perspective view of a part of the printing apparatus of Figure 1.

Referring to the figures, there is shown a printing apparatus 10, having a body 11 housing a first spool 12, and a second spool 14 of inked ribbon or tape 16. Each of the spools 12, 14 is mounted on a respective spindle 18, 20. Each of the first spindle 18 and the second spindle 20 may be driven by a ribbon drive apparatus 22, which may include one or more motors. Rotation of each spindle 18, 20 causes rotation of the respective spool 12, 14, and may be controlled so as to transfer ribbon from one of the first spool 12 and the second spool 14, to the other of the first spool 12 and the second spool 14. Ribbon 16 may be transferred in two directions, i.e. a forward direction and a reverse direction, between the spools 12, 14. The rotation of the or each spindle 18, 20 and/or spool 12, 14 may be controlled and/or monitored in accordance with known methods, for example by a single motor, or a respective motor for each spindle 18, 20, etc.. The printing apparatus 10 may be a print and apply printing apparatus, e.g. operable to print labels for application to another object, or may be operable to print directly on to product packaging, e.g., "overprinting".

The ribbon drive apparatus 22 is operable to transfer ribbon between one of the first and second spools 12, 14 and the other of the first and second spools 12, 14, past a printhead 24. The printhead 24 may include a plurality of energisable printing elements, for example thermally energisable printing elements, which may be selectively operable to transfer ink from the ribbon 16 to a substrate 26. The substrate 26 may be a roll of material, for example paper, film, e.g., biaxially oriented polypropylene, labels, etc.. The substrate 26 may be provided as discrete items to be printed, e.g., labels, as in "print and apply" applications.

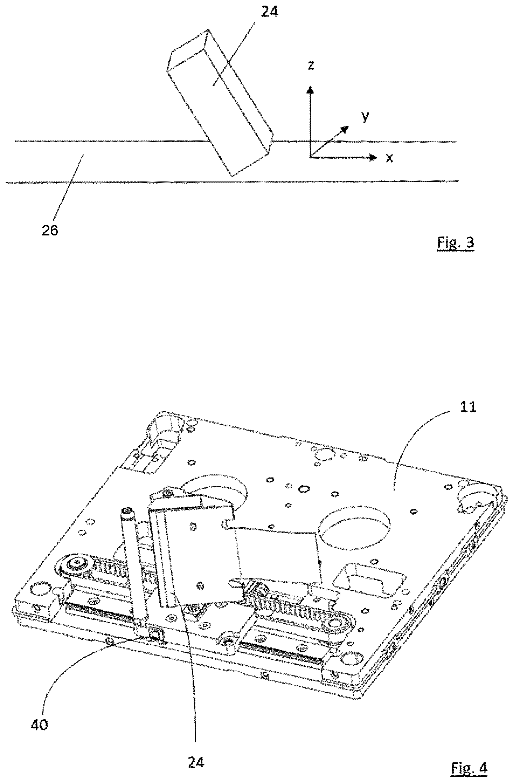

The substrate 26 is supported adjacent the printhead 24 by a substrate support 28. The substrate support 28 may be a platen roller, or a substantially planar platen, for example. The substrate support 28 may be driven by a substrate drive apparatus 29, for example a motor, to advance the substrate 26. It will be appreciated that the substrate drive apparatus 29 need not be positioned in the substrate support 28 and/or need not drive the substrate support 28 directly. The substrate support 28 may be rotated to move the substrate 26 relative to other parts of the printing apparatus 10, for example the printhead 24. The substrate drive apparatus 29 may be operable to advance the substrate 26 into a printing position adjacent the printhead 24. Whilst the substrate drive apparatus 29 is primarily provided to move the substrate in a lateral direction x, the substrate drive apparatus 29 (and/or additional/alternative substrate drive apparatus, not shown) may be operable to move the substrate 26 in one or more directions and/or along each of the axes x, y, z shown in Figure 3.

The printing apparatus 10 may include a controller 30. The controller 30 may be operable to control one or more functions of the printing apparatus 10. For example, the controller 30 may be operable to control the movement of the ribbon 16, for example by controlling the ribbon drive apparatus 22, movement of the printhead 24, and/or the energization of printing elements of the printhead 24. The controller 30 may be operable to monitor parameters and/or functions of the printing apparatus 10. For example, the controller 30 may be operable to receive signals which are indicative of functions and/or parameters of the printing apparatus 10. For example, the controller 30 may be operable to determine and/or monitor the diameters of each spool 12, 14, and/or to determine and/or monitor tension in the ribbon 16 for example. It will be understood that these examples are not intended to be limiting, and any combination of functions of the controller 30 to enable the printing apparatus 10 to carry out printing operations, may be possible.

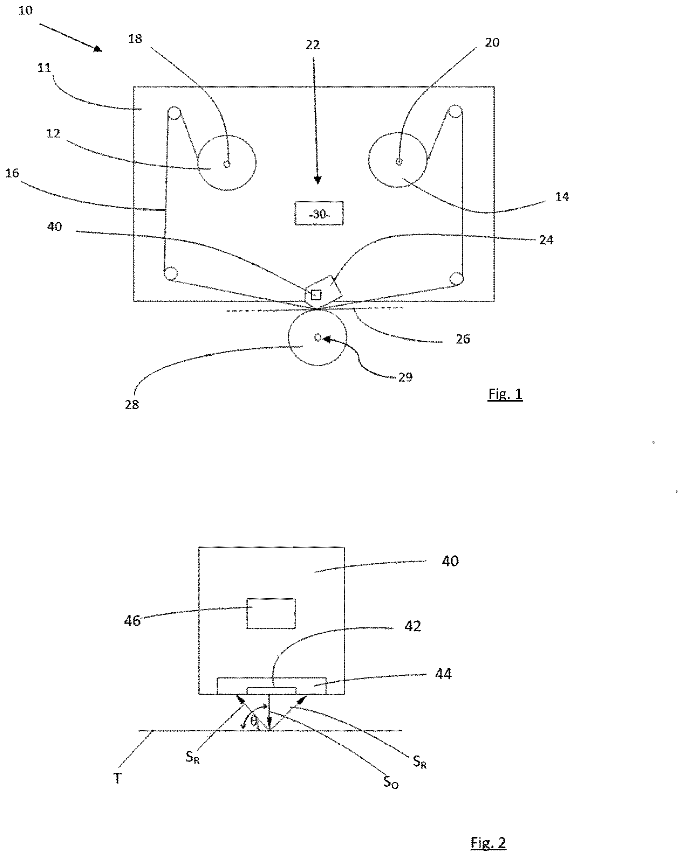

The printing apparatus 10 may include a monitoring device 40. The monitoring device 40 is shown in illustrative form in Figure 2.

The monitoring device 40 may be operable to monitor one or more parameters or characteristics of one or more parts of the printing apparatus 10, for example the printhead 24 and/or the ribbon 16, and/or an item co-operating with the printing apparatus 10, for example the substrate 26.

The monitoring device 40 may include a non-contact sensor. The monitoring device 40 may include an emitter 42 and a receiver 44. The monitoring device 40 may include a processor 46, for example a microprocessor. The emitter 42, receiver 44 and the processor 46 may be integrated in a single device, for example a single integrated circuit or chip.

The emitter 42 may be operable to emit an output signal So. The output So may be or include electromagnetic radiation. The output So of the emitter 42 may include coherent light, e.g. the emitter 42 may be or include a laser. The output of the emitter 42 may be in the infra-red range of the electromagnetic spectrum. The wavelength of the output of the emitter 42 may be between approximately 800 and 1000nm, for example 850nm. The monitoring device 40 may include a vertical-cavity surface-emitting laser (VCSEL). A series of output signals may be emitted. The output signal So may be a pulsed signal. There may be a time interval t between each output signal So being emitted. The output signal So may be emitted at a substantially constant frequency, with the interval t between each output being substantially the same. The time interval t between successive output signals So may be nominally substantially constant, but it will be appreciated that it may be necessary to identify and account for jitter.

The output signal So of the emitter 42 may be directed towards a target surface T, a parameter of which is to be determined and/or monitored. An angle of incidence θᵢ of the signal So at the target surface T may be in the range 80 to 100°, for example. The angle of incidence θᵢ of the signal at the target surface T may be approximately 90°.

The target surface T may be a part of the printing apparatus 10, an item which cooperates with the printing apparatus 10 or an item separate from the printing apparatus 10. The target surface T may be the substrate 26.

The receiver 44 of the monitoring device 40 may be configured to receive all or part of the output signal So from the emitter 42. The receiver 44 may be configured to receive a reflected portion S_{R} of the signal output Sₒ from the emitter 42. The receiver 44 may be a CCD or CMOS device, for example. The emitter 42 may be positioned adjacent the receiver 44. The receiver 44 may partially or completely surround the emitter 42.

The monitoring device 40 may be a miniature chip. The monitoring device 40 may include integrated digital image process circuits. The monitoring device 40 may be a surface mountable component. The monitoring device 40 may be motion detector. The monitoring device 40 may be a laser scatter motion detector. The monitoring device 40 may be of a kind which does not require a lens. The monitoring device 40 may be selected to have a depth of field (DOF) appropriate for positioning the monitoring device inside a printing apparatus. The depth of field of the monitoring device 40 may be selected to be in the range 5mm to 60mm, for example.

A plurality of monitoring devices 40 may be associated with the printing apparatus 10. Each monitoring device 40 may be provided to monitor a particular characteristic or parameter. A plurality of parameters and/or characteristics may be monitored by one or more monitoring devices 40. Each parameter or characteristic to be monitored may be monitored by one monitoring device 40 a plurality of monitoring devices 40. The number of monitoring devices 40 required to monitor a particular parameter/characteristic may depend on the parameter/characteristic to be monitored and/or the target surface(s) T, and may be selected accordingly. The position of the or each monitoring device 40 relative to other parts of the printing apparatus 10 may be selected in accordance with a primary purpose or function of the monitoring device 40. The monitoring device 40 may be positioned in, on or near the printhead 24. The monitoring device 40 (or a part of the monitoring device) may be positioned such that the emitter is operable to emit a signal output So towards a top dead centre position of the substrate support. This position may or may not be covered by the substrate 26. The monitoring device 40 (or a part of the monitoring device) may be positioned such that the emitter is operable to emit a signal output So towards a position offset from the top dead centre position of the substrate support.

The or each monitoring device 40 may be communicable with the controller 30. A single monitoring device 40 is generally referred to herein, for the sake of simplicity, but it is intended that such references may encompass the use of a plurality of monitoring devices 40, where appropriate.

The monitoring device 40 may be operable to measure changes in the position of the target surface T relative to the monitoring device 40, i.e., the monitoring device 40 may be operable to monitor displacement of the target surface T. For example, the monitoring device 40 may be operable to monitor displacement of the substrate 26 and/or the ribbon 16, relative to the monitoring apparatus 40, and/or relative to another part of the printing apparatus 10.

The monitoring device 40 may be operable to determine the speed of the target surface T. The speed of the target surface T may be an absolute speed, or may be a speed relative to another part of the printing apparatus 10, for example the printhead 24 and/or the monitoring device 40.

The monitoring device 40 may be operable to determine changes in position of the target surface T. The target surface T has a reflectivity R_{T}. The reflectivity R_{T} may not be constant, in other words different areas of the target surface may have different reflectivity values. The reflectivity of the surface may also vary with time, for example, the reflectivity of the ribbon 16 may depend on the quantity of ink on the ribbon, and therefore the reflectivity R_{T} of a portion of the ribbon may have one value before ink has been removed during a printing operation, and a different reflectivity R_{T} after ink has been removed. The texture or roughness of the target surface T may affect the reflectivity R_{T}, and/or the signal or pattern reflected by the target surface T.

In use, the monitoring device 40 may be operable to acquire sequential surface images (frames) of the target surface T, and by comparing two or more frames with one another, determining one or more of the speed, direction and magnitude of motion of the target surface T relative to the monitoring device 40. This method will be described in more detail below.

The monitoring device 40 may be operable to carry out a series of monitoring operations to generate displacement data. During a first monitoring operation, the emitter 42 is configured to emit a first output signal So towards the target surface T, and the receiver 44 is configured to receive the reflected portion S_{R} of the output signal So which is reflected by the target surface T. Data representative of the reflected portion S_{R}, for example a pattern, e.g a speckle pattern created by the reflected portion S_{R} of the output may be stored by the processor 46. A series of monitoring operations may be carried out. A monitoring operation may be carried out multiple times per second, for example several thousand times per second. In each monitoring operation, the emitter 42 is configured to emit an output signal So towards the target surface T and the receiver 44 is configured to receive a respective reflected portion S_{R} corresponding with each output signal So. The reflected portion S_{R} is reflected by the target surface T, and is characteristic of the portion of the target T surface that the output was directed towards and reflected from. The pattern created by each reflected portion S_{R}, or data that is characteristic of each reflected portion S_{R} may be stored, for example as an image or "frame", or in any appropriate manner. The pattern or data stored may be stored by the processor 46. The processor 46 may be operable to compare data representative of two or more reflected portions S_{R}, to determine a change or changes in the patterns created, over time. The changes may be caused by the movement of reflective features on the target surface T, since the reflectivity R_{T} of the target surface is not uniform, and if the target surface moves during the interval between the first monitoring operation and the second monitoring operation, the portion of the target surface T struck by the first output signal So, and which reflects the reflected portion S_{R} of the first output signal Sₒ back to the receiver 44 will be a different portion from the portion which is struck by the second or subsequent output signals in a series. Each reflected portion S_{R} may be an interference pattern, e.g. a speckle pattern. Comparing the interference patterns enables a parameter of the target surface to be determined and/or monitored.

The monitoring device 40 is operable to report the movement of the target surface T during a monitoring period, as a change in position, or displacement, in one or more dimensions x, y, z since a previous monitoring operation/reading. The monitoring period may be one or more time intervals t, in other words the monitoring period may include a plurality of monitoring operations. Change in position data, i.e., displacement, of the target surface T relative to the monitoring device 40 may be provided to a controller, e.g., the controller 30. Change in position data determined by the monitoring device 40 and passed to the controller 30 may be read by the controller 30. The monitoring device 40 may pass data to the controller 30 automatically, for example in accordance with a duty cycle and/or in response to a trigger event. Additionally or alternatively, the controller 30 may interrogate the monitoring device for data relating to a change in parameter. Interrogation of the monitoring device 40 by the controller 30 may be automatic, for example in accordance with a duty cycle and/or in response to a trigger event. The term "reading" is intended to mean the receipt of data by the controller 30 from the monitoring device 40, regardless of whether the controller 30 has interrogated the monitoring device 40, or whether the monitoring device 40 has passed the data automatically, for example in accordance with a predetermined schedule, or in response to a trigger event.

The monitoring device 40 may be operable to determine that a change in parameter has been zero since the previous monitoring operation or during a monitoring period. The monitoring device 40 may be operable to indicate to the controller 30 that the change in parameter has been zero since the previous monitoring operation or during a monitoring period. No change in a parameter since the previous monitoring operation or during a monitoring period may be a trigger event. A change in parameter following a period of no change in parameter may be a trigger event. Therefore, monitoring periods may be approximately the same duration, or may be of varying duration. The controller 30 and/or the monitoring device 40 may determine or set the duration of each monitoring period.

Change in parameter data, e.g., displacement, of the target surface T relative to the monitoring device 40, may be summed by the processor 46, and the summed values may be passed to the controller 30. Change in position data in two dimensions may be provided. The change in one dimension may be zero, whilst the change in position in another dimension may be non-zero during the same monitoring period or time interval t. The monitoring device 40 may be operable to indicate that it has detected a change in parameter, e.g. when it has detected movement (displacement) of the target surface T in at least one dimension. If, for example, the target surface T is stationary for a period of time, the monitoring device 40 may carry out a number of monitoring operations during that period of time, and no displacement will be detected. The monitoring device 40 may not pass the data relating to the time during which the target surface is stationary to the controller 30.

If at the end of the period of time during which the target surface was stationary, the monitoring device 40 detects that the target surface has moved in at least one dimension, this change may trigger the monitoring device to pass the data relating to the change in position (displacement) to the controller 30. The controller 30 may be operable to use a single datum indicative of a change, for example a datum which indicates that the target surface T has moved by a distance d in at least one of the dimensions x, y, z during the most recent time interval. The time interval may be set by the monitoring device 40.

By carrying out monitoring operations and/or readings at regular intervals, the speed of the target surface T can be calculated, since the frequency of the monitoring operations and/or the frequency at which the data provided by the monitoring device 40 is sampled (read) by the controller 30 is known. The controller 30 receiving the change in position data may process the data and use the change in parameter (e.g., position) data to control aspects of the printing process, and the operation of the printing apparatus. The time interval between each monitoring operation by the monitoring device and/or between each sample (reading) by the controller 30 may or may not be the same. A clock of the controller 30 may be synchronized with a clock of the monitoring device 40, in order to be able to carry out accurate calculations, for example to determine the speed and/or acceleration of the target surface T relative to the monitoring device 40.

Displacement data obtained by the monitoring device 40 may be sent to the controller 30, and used by the controller 30 in calculations of other parameters/characteristics of the printing apparatus 10 and/or an associated item, e.g. the substrate 26, and/or may be used to determine control functions of the printing apparatus 10, to enable printing operations to be carried out.

As explained briefly above, a parameter or characteristic may be monitored by a plurality of monitoring devices 40. A monitoring array may include a plurality of monitoring devices 40. Each monitoring device 40 in the monitoring array may be spaced from one or more adjacent monitoring devices 40 by a distance less than 10mm, for example 6mm. The plurality of monitoring devices 40 may be arranged in any appropriate manner. The arrangement of the plurality of monitoring devices 40 may be a line, a rectangular array, a substantially circular array, etc.. The arrangement and/or type of the monitoring devices 40 in the monitoring array may depend upon the target surface T being monitored and/or the parameter of the target surface T being monitored.

A plurality of monitoring arrays may be provided. The plurality of monitoring arrays may be operable to monitor a plurality of target surfaces and/or a plurality of parameters, and/or to provide data indicative which may be used to determine one or more further parameters. Where a monitoring device 40 is referred to herein, the skilled person will understand that a single monitoring device 40 may be used or a monitoring array may be used. The most appropriate arrangement of monitoring devices 40 may be selected dependent upon the space available, and/or the parameter/characteristic to be monitored, and/or the accuracy of the monitoring required, and/or the target surface(s) T to be monitored. For example, a matte target surface may be optimally monitored using a monitoring array, to provide sufficiently accurate data indicating a parameter of the surface (it will be understood that this simply a suggestion of a possibility, rather than an indication of an essential feature).

Where a monitoring array is provided, the controller 30 may be operable to distinguish between data provided by each monitoring device 40 of the monitoring array. The controller 30 may be operable to combine data from some or all of the monitoring devices 40 of the monitoring array to determine further parameters of the target surface and/or determine control functions of the printing apparatus 10, to enable printing operations to be carried out.

The target surface T towards which the signal of the monitoring device 40 is directed may be the substrate 26. The monitoring device 40 may be operable to determine a parameter/characteristic of the substate 26, for example the displacement and/or the speed and/or the acceleration of the substrate 26. The target surface T may be a surface which is able to give signals or readings which are indicative of a parameter/characteristic of the substrate 26. For example, the target surface may be a part of the substrate support 28.

In order to determine a parameter/characteristic of the substrate 26, the monitoring device 40 may be positioned inside the body 11 of the printing apparatus 10. A part of the monitoring device 40 may be positioned inside the body 11 of the printing apparatus 10. Alternatively, the monitoring device 40 or a part thereof may be positioned externally of the body 11 of the printing apparatus 10. The monitoring device 40 may be spaced between approximately 10mm and approximately 40mm from the substrate 26. The monitoring device 40 may be positioned such that the angle of incidence θᵢ of the output signal emitted by the monitoring device 40 at the substrate 26 is approximately 90°. The monitoring device 40 may be mounted adjacent the printhead 24. The monitoring device 40 or a part thereof may be mounted on or in the printhead 24. The monitoring device 40 may be positioned at or near a centre line of the printhead 24. The monitoring device 40 may be positioned such that the or each output signal So of the monitoring device 40 is incident on the substrate 26 at a position which is substantially aligned with one or more printing elements of the printhead 24. The method of determining a characteristic, e.g displacement, speed, acceleration, of the substrate 16 is as described above. The monitoring device 40 may be positioned such that the output signal So is incident on the substrate 26, but not on the ribbon 16, despite the ribbon 16 being positioned adjacent (e.g. overlying) the substrate 26 at a position near the printhead 24, and therefore near the monitoring device 40. The position of the monitoring device 40 must be selected carefully to ensure appropriate data collection.

The positioning of the monitoring device 40 may be adjustable. The position of the monitoring device 40 may be automatically and/or manually adjustable. The position of the monitoring device 40 may be adjustable in one or more of the x, y and Z directions. The position of the monitoring device 40 may be adjustable such that the angle of incidence θᵢ of the signal emitted by the monitoring device 40 at the target surface T is adjustable.

The target surface T may be the ribbon 16. The monitoring device 40 may determine and/or monitor the displacement and/or speed of the ribbon 16 directly. The monitoring device 40 may be mounted inside the body 11 of the printing apparatus 10. The monitoring device 40 may be positioned such that the angle of incidence θᵢ of the signal emitted by the monitoring device 40 at the ribbon 16 is approximately 90°. The monitoring device 40 may be mounted on or near the printhead 24, to determine a parameter of the ribbon 16 at or near the printhead 24. The method of determining a characteristic, e.g displacement, speed and/or acceleration of the ribbon 16 is as described above generally, and in relation to the substrate 26.

The monitoring device 40 may be positioned adjacent one of the first and second spools 12, 14. A monitoring device 40 may be associated with each of the first and second spools 12, 14. The or each monitoring device 40 may provide an indication of displacement (i.e. rotation) of the associated spool 12, 14, and/or the speed of rotation of its associated spool 12, 14. This may include determining the displacement and/or speed of rotation of an outer surface of the ribbon 16. A linear displacement of ribbon 16 near to the or each spool 12, 14 may be monitored. Such linear displacement may be indicative of the amount of ribbon 16 wound on to or off the associated spool 12, 14. The angle of rotation of the spool 12, 14 may be known, therefore the diameter of the spools may be calculated from the monitored linear displacement of ribbon 16 near the spool. The monitoring device 40 may be operable to determine a rotational displacement of the outer surface of one or both spools 12, 14 in order to determine the circumference of the or each spool 12, 14. The determination of the speed of rotation and/or the diameter of the or each spool 12, 14 may be carried out as a calibration step. Determination of the speed of rotation and/or the diameter of the or each spool 12, 14 may take place in a very short space of time, which may be the time taken for a few millimeters, for example less than 10mm, of ribbon to be wound on to and/or unwound from one of the spools 12, 14. This enables virtually instantaneous determination of the diameters of the spools 12, 14. This reduces the time spent carrying out the calibration process, and removes the need to transfer the ribbon in both directions. The ability of the monitoring device 40 to directly monitor characteristics/parameters such as displacement, means that determination of a characteristic of the or each spool 12, 14 may take place during operation of the printing apparatus 10, rather than during a calibration step. Monitoring of one or more parameters/characteristics may take place continually (i.e. repeatedly) or substantially continuously during use of the printing apparatus 10. Such monitoring during use of the printing apparatus 10 may be instead of or in addition to a calibration step or steps.

The ability of the or each monitoring device 40 to directly determine characteristics/parameters of the or each spool 12, 14 means that ancillary parts, for example a monitoring roller and/or a Hall effect sensor are not required to determine the relative speeds of the spools 12, 14, for example. The speed of one of or each of the spools 12, 14 (and/or the relative speed of the spools 12, 14, and/or a signal indicative of the speed of each spool 12, 14) may be communicated to the controller 30. The controller 30 may use this information relating to the speed of the or each spool 12, 14 to determine control of the ribbon drive, for example to determine the control of a motor drive circuit of the ribbon drive apparatus 22.

The monitoring device 40 may be operable to determine a characteristic, e.g. the position, displacement and/or speed of the printhead 24. The monitoring device 40 may be operable to determine displacement of the printhead 24 relative to another part of the printing apparatus 10, for example. In this case, the monitoring device 40 may be in a fixed position relative to the printhead 24, e.g. attached to the printhead 24, and the target surface T may be another part of the printing apparatus 10, for example a part of the body 11. Alternatively, the monitoring device 40 may be mounted on a (preferably stationary) part of the printing apparatus 10, for example the body 11, and the target surface T may be a part of the printhead 24. This is useful in determining whether the printhead 24 is in the correct position relative to the ribbon 16, and/or the substrate 26, and/or one or more other parts of the printing apparatus 10, e.g. the substrate support 28.

The monitoring device 40 may be used to determine the position and/or displacement of the printhead 24 into and out of the printing and non-printing positions. The monitoring device 40 and/or the controller 30 may be operable to determine the speed and/or acceleration of the printhead relative to the substrate support 28, for example. As mentioned above, it is desirable to be able to determine the position 24 of the printhead accurately. The monitoring device 40 may be operable to determine an absolute position of the printhead 24, and/or be able to determine the position of the printhead 24 relative to another object, for example another part of the printing apparatus 10. The monitoring device 40 may be operable to determine the position of the printhead relative to the ribbon 16 and/or the substrate 26 and/or the substrate support 28, for example.

The monitoring device 40 may be operable to determine a distance of the printhead 24 from another part of the printing apparatus, for example one or more of the ribbon 16, the substrate 26 and the substrate support 28. The monitoring device 40 may be operable to determine a lateral position and/or lateral movement of the printhead 24 along a first axis x, which may be substantially parallel to the direction of travel of the ribbon 16 and/or the substrate 26; along a second axis Y which may be substantially perpendicular to the first axis x; and/or along a third axis z, which may be substantially parallel to each of the first and second axes x, y, i.e. towards and away from the ribbon 16 and/or the substrate 26, as depicted in Figure 3.

The monitoring device 40 may additionally or alternatively be able to determine an angle of rotation of the printhead 24, and/or an angle of the printhead 24 relative to one or more of the ribbon 16, the substrate 25 and the substrate support 28. Since the monitoring device 40 is operable to directly determine the displacement of the printhead 24, the position of the printhead 24 may be more accurately determined. The monitoring device 40 enables the displacement and/or position of the printhead 24 to be determined directly and accurately without the need for load sensors, and without reliance upon measuring or determining parameters which are indicative of the position of the printhead 24.

This is particularly relevant to ensure that printing operations are carried out accurately and in the correct place. Determining the position, displacement or speed of the printhead 24 along any or all of the axes x, y, z may be beneficial in ensuring that the correct printing position and hence printing pressure is achieved during a printing operation, such that the quality of the print is optimised.

The ability to monitor characteristics, e.g. position, displacement, speed and acceleration during use of the printing apparatus 10, means that the operation of the printing apparatus 10 may be more accurate. It is not necessary to rely on assumptions or approximations, or even calibration data, since directly monitored characteristics can be used in real time, or close to real time.

Any combination of characteristics and/or parameters described above may be monitored by one or more monitoring devices 40. The controller 30 may use data obtained by the or each monitoring device to determine and/or monitor one or more parameters and/or characteristics and/or one or more further parameters/characteristics. Data relating to any or all of the characteristics/parameters determined/monitored by the or each monitoring device 40 may be passed to the controller 30 of the printing apparatus 10 and may be stored and/or processed and/or utilized in determining operational functions of parts of the printing apparatus 10, e.g. control of the ribbon drive apparatus 22, energization of the printing elements of the printhead 24, control of the substrate drive apparatus 29, etc..

An advantage of the monitoring device 40 being a non-contact sensor device is that the problem of slippage of the material (e.g., ribbon or substrate) around the roller/wheel which can occur with encoders is removed. There is no contact between the material (e.g. ribbon 16 or substrate 26) with a wheel or roller, and therefore the likelihood of damaging the material is reduced or eliminated. There are fewer moving and/or contacting parts, which reduces the need for maintenance and repair of the printing apparatus 10. This leads to reduced "down-time" and increased efficiency of the production line in which the printing apparatus 10 is installed.

The monitoring device may be surface mountable, such that a risk of disturbance, misalignment or damage during or after installation is reduced as compared with other types of monitoring device, such as an encoder.

Positioning the monitoring device 40 inside the printing apparatus 10, i.e., integrating the monitoring device 40 with the printing apparatus 10 is advantageous since the monitoring device 40 does not have to be installed, connected or configured separately from the printing apparatus 10, by an installation engineer. The printing apparatus 10 is able to carry out printing operations without requiring data from an external component, e.g. an encoder. There is no wiring external to the printing apparatus 10, meaning that the printing apparatus 10 is "plug and play", for example with regard to its ability to monitor parameters relating to the substrate 26 and/or ribbon 16. The monitoring device 40 is also protected by the body 11 of the printing apparatus 10 during installation and/or use of the printing apparatus 10.

It will be understood that the target surface T may be inside or outside of the body 11, and the target surface T need not be a part of the printing apparatus per se. The substrate 26, for example, may be considered to co-operate with or be associated with the printing apparatus 10, or may be considered to be a part of the printing apparatus 10. The ribbon 16, is an essential feature of a thermal transfer printing operation, but is a consumable item which may be provided separately from the printing apparatus 10, and therefore may be considered to co-operate or be associated with the printing apparatus 10, rather than being considered a part of the printing apparatus 10, per se. It will be appreciated that the ribbon 16 may be considered a part of the printing apparatus 10.

Using the monitoring device 40 to carry out monitoring operations at a nominally consistent rate means that there is a substantially constant processor load, regardless of the parameter/characteristic being measured, e.g. regardless of the substrate and/or ribbon speed. This is an advantage compared with using an encoder.

Using a plurality of monitoring devices 40 in a monitoring array may allow for redundancy, and may also increase accuracy, by being able to account for/correct for noise and/or other errors in data output by each monitoring device 40. Signal processing may be used to account for/correct for noise and/or other errors. This may increase the accuracy of the data received by the controller 30, and therefore lead to improved performance of the printing apparatus 10.

An advantage of the emitter 44 being a coherent light source, for example a laser, is that a plurality of monitoring devices 40 may be positioned adjacent one another, relatively close to one another, for example less than 10mm apart, for example 6mm apart. A further advantage is that a lens is not required to form part of the or each monitoring device. The monitoring devices 40 may be arranged in an array as explained above. To the extent that it may be necessary to shield each monitoring device 40 from other nearby monitoring devices 40 or other monitoring arrays, it may be possible to use light guides to direct the output(s) of each emitter 42 towards the corresponding receiver 44.

An advantage of the emitter 42 being a vertical-cavity surface-emitting laser is that such emitters are highly reliable, and not susceptible to damage of an exit aperture of the emitter 42.

The or each monitoring device 40 outputting coherent electromagnetic radiation, e.g. a laser, enables the monitoring device to be operable through a substantially transparent shield. The monitoring device 40 does not require a lens, and therefore may be placed behind or inside a shield device without the need for other components (e.g., a lens) to also be placed behind or inside the shield. The or each monitoring device 40 may be covered by or housed in a shield apparatus. The shield apparatus may protect more than one monitoring device 40. The shield apparatus may be substantially transparent, or include a substantially transparent portion, through which outputs So and reflected portions S_{R} may pass. The shield may be a box. The shield may include a portion of substantially transparent plastics material. The shield apparatus may be hermetically sealed. Providing a shield apparatus enables the or each monitoring device 40 to be positioned inside the printing apparatus 10 whilst the risk of contamination of the monitoring device 40 is reduced. Even if the shield apparatus becomes contaminated, the shield apparatus may be cleaned and the monitoring device 40 will not be damaged by the original contaminant (e.g., ink) or the cleaning method/materials. The shield may be removeable and/or replaceable.

The monitoring device 40 saves space since it can be placed inside the printing apparatus 10, and therefore takes up less space in a production line (no external components/cables). Whilst some space is taken up by the monitoring device 40, the use of a laser emitter means that no lens is required, such that the space taken up by the monitoring device 40 is small compared with other types of sensors, e.g., optical sensors. The monitoring device 40 is very small compared with other types of monitoring device, for example an encoder.

The applicants have determined that despite the type of monitoring device described herein being typically used in applications with highly reflective surfaces, it is possible to use a sensor of this type with target surfaces having a typically lower reflectivity, for example inked ribbon and matte substrates. The maximum speed of the target surface T may be selected and/or set in accordance with the reflectivity of the target surface T. For example a glossy target surface may have a higher reflectivity than, say, matte paper. The selection of an appropriate monitoring device may be dependent on the maximum speed of the target surface relative to the monitoring device. The monitoring device 40 may be operable to monitor a target surface T moving at speeds in the range 0.5ms⁻¹ to 2.3ms⁻¹ relative to the monitoring device 40.

An alternative monitoring device may be provided, instead of, or in addition to one or more monitoring devices 40. In applications where it may not be appropriate to include a monitoring device 40 (as described above) inside the printing apparatus 10, an optical monitoring device may be provided, for example in combination with a lens, to focus the output emitted and/or the reflected portion of the output. The emitter may be an LED, for example. Such an optical monitoring device being a non-contact sensor device still provides the advantage that the problem of slippage of the material (e.g., ribbon or substrate) around the roller/wheel which can occur with encoders is removed. There is no contact between the material (e.g. ribbon 16 or substrate 26) with a wheel or roller, and therefore the likelihood of damaging the material is reduced or eliminated. There are fewer moving and/or contacting parts, which reduces the need for maintenance and repair of the printing apparatus 10. This leads to reduced "down-time" and increased efficiency of the production line in which the printing apparatus 10 is installed.

Use of such an optical sensor may be appropriate to replace existing apparatus, e.g a reference roller and encoder/proximity sensor, for determining displacement and/or speed of the substrate and/or linear displacement/speed of the ribbon.

Speed of calibration may be increased using such an optical sensor, since it is possible to determine parameters substantially in real time. Monitoring of parameters/characteristics may take place during use of the printing apparatus 10 for printing operations. It may be possible to dispense with "traditional" calibration methods entirely, by monitoring parameters/characteristics substantially in real time.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

The invention is defined in the claims.

## Claims

1. A printing apparatus (10) including a printhead (24) and a monitoring device (40), the monitoring device (40) including an emitter (42), a receiver (44), and a processor (46); the emitter (42) being operable to emit a first output (S_{O}) and a second output (S_{O}) towards a target surface (T), and the receiver (44) being operable to receive first data corresponding to a reflected portion (S_{R}) of the first output (S_{O}) and data corresponding to a reflected portion (S_{R}) of the second output (S_{O}), each reflected portion (S_{R}) having been reflected by the target surface (T), wherein each output (S_{O}) emitted by the emitter (42) is electromagnetic radiation, each reflected portion (S_{R}) is an interference pattern, and in that the processor (46) is operable to compare the data corresponding to the reflected portion (S_{R}) of the first output (S_{O}) and the data corresponding to the reflected portion (S_{R}) of the second output (S_{O}) to monitor a parameter of the target surface (T) relative to the monitoring device (40).

2. A printing apparatus (10) according to claim 1 wherein the parameter is at least one of position, displacement, speed and acceleration of the target surface (T).

3. A printing apparatus (10) according to any preceding claim wherein the emitter (42) is a laser.

4. A printing apparatus (10) according to any of the preceding claims wherein at least a part of the monitoring device (40) is housed substantially within a body (11) of the printer (10), the body (11) of the printer (10) also housing the printhead (24).

5. A printing apparatus (10) according to any of the preceding claims, wherein at least a part of the monitoring device (40) is positioned on or adjacent the printhead (24).

6. A printing apparatus (10) according to any of the preceding claims wherein the emitter (42) of the monitoring device (40) is arranged such that the output of the emitter (42) is emitted towards a position on the target surface (T) which is substantially aligned with one or more printing elements of the printhead (24).

7. A printing apparatus (10) according to any preceding claims, wherein the target surface (T) is at least one of a substrate (26) to be printed, and an inked ribbon (16).

8. A printing apparatus (10) according to any of the preceding claims including a plurality of monitoring devices (40), so as to enable monitoring of a plurality of parameters, and optionally to enable monitoring parameters (40) of a plurality of target surfaces (T).

9. A printing apparatus (10) according to any of the preceding claims further including a controller (30) wherein the controller (30) is operable to receive data indicative of one or more monitored parameters and to use the data indicative of the one or more monitored parameters to determine at least one of the speed of the target surface (T) relative to the monitoring device (40), the acceleration of the target surface (T), and a diameter of a spool (12, 14) of inked ribbon (16).

10. A method of monitoring a parameter in a printing apparatus (10), the method including:
providing a monitoring device (40) including an emitter (42), a receiver (44), and a processor (46);
emitting a first output (S_{O}) from the emitter (42) towards a target surface (T) at a first time;
receiving a reflected portion (S_{R}) of the first output (S_{O}), which is reflected by the target surface (T), at the receiver (44);
storing data representative of the reflected portion (S_{R}) of the first output (S_{O}) in the monitoring device (40);
emitting a second output (S_{O}) from the emitter (42) towards the target surface (T), at a second time, the second time being after the first time, wherein a difference between the first time and the second time is a first interval (t);
receiving a reflected portion (S_{R}) of the second output (S_{O}), which is reflected by the target surface (T), at the receiver (44);
wherein the first output (S_{O}) and the second output (S_{O}) of the emitter (42) includes electromagnetic radiation and each reflected portion (S_{R}) is an interference pattern, and the method includes comparing data representative of the reflected portion (S_{R}) of the second output (S_{O}) with the data representative of the reflected portion (S_{R}) of the first output (S_{O}), using the processor (46) of the monitoring device (40), to monitor a parameter of the target surface (T) relative to the monitoring device (40) during the first interval (t).

11. A method according to claim 10 wherein the parameter is at least one of position and displacement of the target surface (T) relative to the monitoring device (40).

12. A method according to claim 10 or 11 wherein the method includes:
emitting a series of coherent electromagnetic radiation outputs (S_{O}), there being a respective time interval (t) between each output and a subsequent output in the series;
receiving a corresponding reflected portion (S_{R}) of each output (S_{O}) of the series at the receiver (44); and
determining a monitoring period between a first and last output of at least three outputs of the series;
comparing the respective reflected portions (S_{R}) of the at least three outputs (S_{O}) of the series, to monitor displacement of the target surface (T) relative to the monitoring device (40) during the monitoring period.

13. A method according to any of claims 10 to 12 wherein comparing the reflected portions (S_{R}) of the outputs enables monitoring of displacement of the target surface (T) relative to the monitoring device (40) in two dimensions.

14. A method according to any of claims 10 to 13 including receiving data indicative of the monitored parameter of the target surface (T) at a controller (30) of a printing apparatus (10), and using the monitored parameter to determine a further parameter of the target surface (T), and optionally using at least one of the monitored parameter and the further parameter to control an aspect of a printing operation of the printing apparatus (10).

15. A method according to any of claims 10 to 14 wherein the target surface (T) is a substrate (26) to be printed.

## Patentansprüche

1. Druckeinrichtung (10), die einen Druckkopf (24) und eine Überwachungsvorrichtung (40) einschließt, wobei die Überwachungsvorrichtung (40) einen Sender (42), einen Empfänger (44) und einen Prozessor (46) einschließt; wobei der Sender (42) dazu betreibbar ist, eine erste Ausgabe (Sₒ) und eine zweite Ausgabe (Sₒ) in Richtung einer Zieloberfläche (T) zu emittieren, und wobei der Empfänger (44) dazu betreibbar ist, erste Daten zu empfangen, die einem reflektierten Abschnitt (S_{R}) der ersten Ausgabe (Sₒ) entsprechen, und Daten, die einem reflektierten Abschnitt (S_{R}) der zweiten Ausgabe (Sₒ) entsprechen, zu empfangen, wobei jeder reflektierte Abschnitt (S_{R}) von der Zieloberfläche (T) reflektiert wurde, wobei jede von dem Sender (42) emittierte Ausgabe (Sₒ) elektromagnetische Strahlung ist, jeder reflektierte Abschnitt (S_{R}) ein Interferenzmuster ist, und wobei der Prozessor (46) dazu betreibbar ist, die Daten, die dem reflektierten Abschnitt (S_{R}) der ersten Ausgabe (Sₒ) entsprechen, und die Daten, die dem reflektierten Abschnitt (S_{R}) der zweiten Ausgabe (Sₒ) entsprechen, zu vergleichen, um einen Parameter der Zieloberfläche (T) relativ zu der Überwachungsvorrichtung (40) zu überwachen.

2. Druckeinrichtung (10) nach Anspruch 1, wobei der Parameter mindestens eines von Position, Verschiebung, Geschwindigkeit und Beschleunigung der Zieloberfläche (T) ist.

3. Druckeinrichtung (10) nach einem vorstehenden Anspruch, wobei der Sender (42) ein Laser ist.

4. Druckeinrichtung (10) nach einem der vorstehenden Ansprüche, wobei mindestens ein Teil der Überwachungsvorrichtung (40) im Wesentlichen innerhalb eines Körpers (11) des Druckers (10) untergebracht ist, wobei der Körper (11) des Druckers (10) auch den Druckkopf (24) unterbringt.

5. Druckeinrichtung (10) nach einem der vorstehenden Ansprüche, wobei mindestens ein Teil der Überwachungsvorrichtung (40) auf oder neben dem Druckkopf (24) positioniert ist.

6. Druckeinrichtung (10) nach einem der vorstehenden Ansprüche, wobei der Sender (42) der Überwachungsvorrichtung (40) so eingerichtet ist, dass die Ausgabe des Senders (42) in Richtung einer Position auf der Zieloberfläche (T) emittiert, die im Wesentlichen mit einem oder mehreren Druckelementen des Druckkopfs (24) ausgerichtet ist.

7. Druckeinrichtung (10) nach einem der vorstehenden Ansprüche, wobei die Zieloberfläche (T) mindestens eines von einem bedruckenden Substrat (26) und einem Tintenband (16) ist.

8. Druckeinrichtung (10) nach einem der vorstehenden Ansprüche, die eine Vielzahl von Überwachungsvorrichtungen (40) einschließt, um das Überwachen einer Vielzahl von Parametern zu ermöglichen und optional das Überwachen von Parametern (40) einer Vielzahl von Zieloberflächen (T) zu ermöglichen.

9. Druckeinrichtung (10) nach einem der vorstehenden Ansprüche, die weiter eine Steuereinheit (30) einschließt, wobei die Steuereinheit (30) dazu betreibbar ist, Daten zu empfangen, die einen oder mehrere überwachte Parameter angeben, und die Daten, die den einen oder die mehreren überwachten Parameter angeben, zu verwenden, um mindestens eines von der Geschwindigkeit der Zieloberfläche (T) relativ zu der Überwachungsvorrichtung (40), der Beschleunigung der Zieloberfläche (T) und einem Durchmesser einer Spule (12, 14) mit Tintenband (16) zu bestimmen.

10. Verfahren zum Überwachen eines Parameters in einer Druckeinrichtung (10), wobei das Verfahren einschließt:
Bereitstellen einer Überwachungsvorrichtung (40), die einen Sender (42), einen Empfänger (44) und einen Prozessor (46) einschließt;
Emittieren einer ersten Ausgabe (Sₒ) von dem Sender (42) in Richtung einer Zieloberfläche (T) zu einem ersten Zeitpunkt;
Empfangen eines reflektierten Abschnitts (S_{R}) der ersten Ausgabe (Sₒ), der von der Zieloberfläche (T) reflektiert wird, an dem Empfänger (44);
Speichern von Daten, die den reflektierten Abschnitt (S_{R}) der ersten Ausgabe (Sₒ) darstellen, in der Überwachungsvorrichtung (40);
Emittieren einer zweiten Ausgabe (Sₒ) von dem Sender (42) in Richtung der Zieloberfläche (T) zu einem zweiten Zeitpunkt, wobei der zweite Zeitpunkt nach dem ersten Zeitpunkt liegt, wobei eine Differenz zwischen dem ersten Zeitpunkt und dem zweiten Zeitpunkt ein erstes Intervall (t) ist;
Empfangen eines reflektierten Abschnitts (S_{R}) der zweiten Ausgabe (Sₒ), der von der Zieloberfläche (T) reflektiert wird, an dem Empfänger (44);
wobei die erste Ausgabe (Sₒ) und die zweite Ausgabe (Sₒ) des Senders (42) elektromagnetische Strahlung einschließen und jeder reflektierte Abschnitt (S_{R}) ein Interferenzmuster ist, und das Verfahren das Vergleichen von Daten, die den reflektierten Abschnitt (S_{R}) der zweiten Ausgabe (Sₒ) darstellen, mit den Daten, die den reflektierten Abschnitt (S_{R}) der ersten Ausgabe (Sₒ) darstellen, unter Verwendung des Prozessors (46) der Überwachungsvorrichtung (40) einschließt, um einen Parameter der Zieloberfläche (T) relativ zu der Überwachungsvorrichtung (40) während des ersten Intervalls (t) zu überwachen.

11. Verfahren nach Anspruch 10, wobei der Parameter mindestens eines von Position und Verschiebung der Zieloberfläche (T) relativ zu der Überwachungsvorrichtung (40) ist.

12. Verfahren nach Anspruch 10 oder 11, wobei das Verfahren einschließt:
Emittieren einer Reihe kohärenter elektromagnetischer Strahlungsausgaben (Sₒ), wobei zwischen jeder Ausgabe und einer nachfolgenden Ausgabe in der Reihe ein jeweiliges Zeitintervall (t) besteht;
Empfangen eines entsprechenden reflektierten Abschnitts (S_{R}) jeder Ausgabe (Sₒ) der Reihe an dem Empfänger (44); und
Bestimmen eines Überwachungszeitraums zwischen einer ersten und letzten Ausgabe von mindestens drei Ausgaben der Reihe;
Vergleichen der jeweiligen reflektierten Abschnitte (S_{R}) der mindestens drei Ausgaben (Sₒ) der Reihe, um eine Verschiebung der Zieloberfläche (T) relativ zu der Überwachungsvorrichtung (40) während des Überwachungszeitraums zu überwachen.

13. Verfahren nach einem der Ansprüche 10 bis 12, wobei das Vergleichen der reflektierten Abschnitte (S_{R}) der Ausgaben das Überwachen einer Verschiebung der Zieloberfläche (T) relativ zu der Überwachungsvorrichtung (40) in zwei Dimensionen ermöglicht.

14. Verfahren nach einem der Ansprüche 10 bis 13, das das Empfangen von Daten, die den überwachten Parameter der Zieloberfläche (T) angeben, an einer Steuereinheit (30) einer Druckeinrichtung (10) und das Verwenden des überwachten Parameters zum Bestimmen eines weiteren Parameters der Zieloberfläche (T) und optional das Verwenden mindestens eines von dem überwachten Parameter und dem weiteren Parameter zum Steuern eines Aspekts eines Druckvorgangs der Druckeinrichtung (10) einschließt.

15. Verfahren nach einem der Ansprüche 10 bis 14, wobei die Zieloberfläche (T) ein zu bedruckendes Substrat (26) ist.

## Revendications

1. Appareil d'impression (10) incluant une tête d'impression (24) et un dispositif de surveillance (40), le dispositif de surveillance (40) incluant un émetteur (42), un récepteur (44) et un processeur (46) ; l'émetteur (42) étant apte à émettre une première sortie (Sₒ) et une seconde sortie (Sₒ) vers une surface cible (T), et le récepteur (44) étant apte à recevoir des premières données correspondant à une partie réfléchie (S_{R}) de la première sortie (Sₒ) et des données correspondant à une partie réfléchie (S_{R}) de la seconde sortie (Sₒ), chaque partie réfléchie (S_{R}) ayant été réfléchie par la surface cible (T), dans lequel chaque sortie (Sₒ) émise par l'émetteur (42) est un rayonnement électromagnétique, chaque partie réfléchie (S_{R}) est un motif d'interférence, et en ce que le processeur (46) est apte à comparer les données correspondant à la partie réfléchie (S_{R}) de la première sortie (Sₒ) et les données correspondant à la partie réfléchie (S_{R}) de la seconde sortie (Sₒ) pour surveiller un paramètre de la surface cible (T) par rapport au dispositif de surveillance (40).

2. Appareil d'impression (10) selon la revendication 1, dans lequel le paramètre est au moins l'un parmi la position, le déplacement, la vitesse et l'accélération de la surface cible (T).

3. Appareil d'impression (10) selon une quelconque revendication précédente, dans lequel l'émetteur (42) est un laser.

4. Appareil d'impression (10) selon l'une quelconque des revendications précédentes, dans lequel au moins une partie du dispositif de surveillance (40) est logée sensiblement à l'intérieur d'un corps (11) de l'imprimante (10), le corps (11) de l'imprimante (10) logeant également la tête d'impression (24).

5. Appareil d'impression (10) selon l'une quelconque des revendications précédentes, dans lequel au moins une partie du dispositif de surveillance (40) est positionnée sur ou adjacente à la tête d'impression (24).

6. Appareil d'impression (10) selon l'une quelconque des revendications précédentes, dans lequel l'émetteur (42) du dispositif de surveillance (40) est disposé de telle sorte que la sortie de l'émetteur (42) est émise vers une position sur la surface cible (T) qui est sensiblement alignée avec un ou plusieurs éléments d'impression de la tête d'impression (24).

7. Appareil d'impression (10) selon l'une quelconque des revendications précédentes, dans lequel la surface cible (T) est au moins l'un parmi un substrat (26) à imprimer et un ruban encreur (16).

8. Appareil d'impression (10) selon l'une quelconque des revendications précédentes, incluant une pluralité de dispositifs de surveillance (40), de manière à permettre la surveillance d'une pluralité de paramètres, et éventuellement à permettre la surveillance de paramètres (40) d'une pluralité de surfaces cibles (T).

9. Appareil d'impression (10) selon l'une quelconque des revendications précédentes, incluant en outre un dispositif de commande (30), dans lequel le dispositif de commande (30) est apte à recevoir des données indicatives d'un ou plusieurs paramètres surveillés et à utiliser les données indicatives des un ou plusieurs paramètres surveillés pour déterminer au moins un parmi la vitesse de la surface cible (T) par rapport au dispositif de surveillance (40), l'accélération de la surface cible (T) et un diamètre d'une bobine (12, 14) de ruban encreur (16).

10. Procédé de surveillance d'un paramètre dans un appareil d'impression (10), le procédé incluant :
la fourniture d'un dispositif de surveillance (40) incluant un émetteur (42), un récepteur (44) et un processeur (46) ;
l'émission d'une première sortie (Sₒ) depuis l'émetteur (42) vers une surface cible (T) à un premier instant ;
la réception d'une partie réfléchie (S_{R}) de la première sortie (Sₒ), qui est réfléchie par la surface cible (T), au niveau du récepteur (44) ;
le stockage de données représentatives de la partie réfléchie (S_{R}) de la première sortie (Sₒ) dans le dispositif de surveillance (40) ;
l'émission d'une seconde sortie (Sₒ) depuis l'émetteur (42) vers la surface cible (T), à un second instant, le second instant étant postérieur au premier instant, dans lequel une différence entre le premier instant et le second instant est un premier intervalle (t) ;
la réception d'une partie réfléchie (S_{R}) de la seconde sortie (Sₒ), qui est réfléchie par la surface cible (T), au niveau du récepteur (44) ;
dans lequel la première sortie (Sₒ) et la seconde sortie (Sₒ) de l'émetteur (42) incluent un rayonnement électromagnétique et chaque partie réfléchie (S_{R}) est un motif d'interférence, et le procédé inclut la comparaison de données représentatives de la partie réfléchie (S_{R}) de la seconde sortie (Sₒ) avec les données représentatives de la partie réfléchie (S_{R}) de la première sortie (Sₒ), en utilisant le processeur (46) du dispositif de surveillance (40), pour surveiller un paramètre de la surface cible (T) par rapport au dispositif de surveillance (40) pendant le premier intervalle (t).

11. Procédé selon la revendication 10, dans lequel le paramètre est au moins un parmi une position et un déplacement de la surface cible (T) par rapport au dispositif de surveillance (40).

12. Procédé selon la revendication 10 ou 11, dans lequel le procédé inclut :
l'émission d'une série de sorties de rayonnement électromagnétique cohérent (Sₒ), un intervalle de temps respectif (t) étant présent entre chaque sortie et une sortie suivante dans la série ;
la réception d'une partie réfléchie correspondante (S_{R}) de chaque sortie (Sₒ) de la série au niveau du récepteur (44) ; et
la détermination d'une période de surveillance entre une première et une dernière sortie parmi au moins trois sorties de la série ;
la comparaison des parties réfléchies respectives (S_{R}) des au moins trois sorties (Sₒ) de la série, pour surveiller le déplacement de la surface cible (T) par rapport au dispositif de surveillance (40) pendant la période de surveillance.

13. Procédé selon l'une quelconque des revendications 10 à 12, dans lequel la comparaison des parties réfléchies (S_{R}) des sorties permet de surveiller le déplacement de la surface cible (T) par rapport au dispositif de surveillance (40) dans deux dimensions.

14. Procédé selon l'une quelconque des revendications 10 à 13, incluant la réception de données indicatives du paramètre surveillé de la surface cible (T) au niveau d'un dispositif de commande (30) d'un appareil d'impression (10), et l'utilisation du paramètre surveillé pour déterminer un autre paramètre de la surface cible (T), et éventuellement l'utilisation d'au moins l'un parmi le paramètre surveillé et l'autre paramètre pour commander un aspect d'une opération d'impression de l'appareil d'impression (10).

15. Procédé selon l'une quelconque des revendications 10 à 14, dans lequel la surface cible (T) est un substrat (26) à imprimer.
